# EUROPEAN PATENT SPECIFICATION

(11) **EP 2 813 193 B1**
(45) Date of publication and mention of the grant of the patent: **14.06.2017**
(21) Application number: 14162496.5
(22) Date of filing: 28.03.2014
(51) Int. Cl.: A61C 7/08, A61C 7/04

(54) **Orthodontic System**
Orthodontisches System
Système orthodontique

(30) Priority: 13.06.2013 TW 102120908
(43) Date of publication of application: 17.12.2014
(73) Proprietor: Tseng, Chen-Wen, Taipei City 111 (TW)
(72) Inventor: Tseng, Chen-Wen, Taipei City 111 (TW)
(74) Representative: Style, Kelda Camilla Karen

(56) References cited:
- WO-A1-99/42055
- WO-A1-2005/092234
- WO-A1-2011/022654
- WO-A1-2014/195787
- WO-A2-2008/048903
- CA-A1- 2 845 130
- US-A- 3 469 315
- US-A1- 2003 190 575
- US-A1- 2005 233 276
- US-A1- 2006 177 789
- US-A1- 2009 191 502
- US-A1- 2010 279 245

## Description

The invention relates to an orthodontic system capable of correcting of irregular teeth of a user.

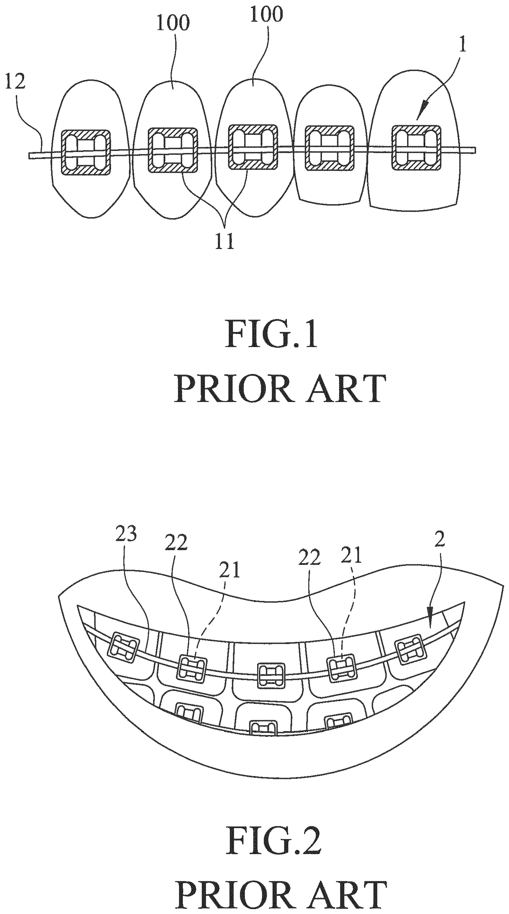

Referring to FIG. 1, a first example of conventional dental braces 1 includes a metal wire 12 and a plurality of metal brackets 11 attached respectively to teeth 100 of a user. The metal wire 12 extends through the brackets 11 to align and correct the teeth 100 to desired positions. However, the conventional dental braces 1 have a relatively poor visual aesthetic quality.

FIG. 2 shows another conventional dental braces 2 disclosed in Taiwanese Utility Model No. M441455, which include a plurality of brackets 21 and a metal wire 23 extending through the brackets 21. The brackets 21 are coated with composite materials 22, such as ceramic, having a color similar to that of tooth color. However, the metal wire 23 is still visible, and thus, also adversely affects aesthetic appearance of the user. Additionally, both of the conventional dental braces 1 and 2 are difficult to clean, resulting in dental caries and periodontal diseases.

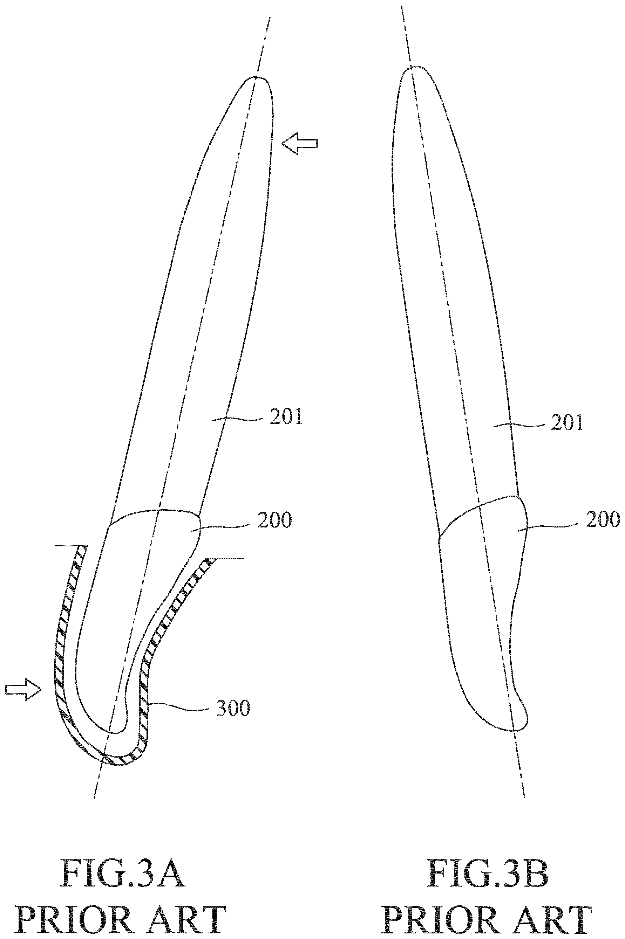

Referring to FIG. 3A, a conventional dental appliance 300 for receiving a dentition of a user is shown. The conventional dental appliance 300 contacts and pushes a tooth 200 that requires rearrangement in a direction indicated by arrow shown in FIG. 3A. Further referring to FIG. 3B, however, a torque generated by the dental appliance 300 would cause lingual crown tip of the tooth 200 and a root 201 of the tooth 200,and the tooth 200 and the root 201 thereof would be inclined relative to the alveolar buccal bone, resulting in prominence of the root 201.

CA 2845130 discloses a clear aligner and manufacturing method thereof, a traction device for clear aligner, and an aid for a traction device for a clear aligner, wherein the clear aligner can improve orthodontic effects. WO2014195787 published on 11-12-2014 claims the priority date of 07-06-2013. This earlier application discloses an orthodontic system comprising a shell for receiving the row of teeth of one jaw, said appliance being provided with a guide slot and two hooks placed on each side of said guide slot and projecting outwardly away from the space of the appliance receiving the teeth of the patient. A tooth attachment can be attached to a tooth and can extend through guide slot and through shell. Two elastic attachment bands are utilized: For each attachment band, a first end is attached to a hook, and a second end is attached to tooth attachment. In such an embodiment multiple forces can be applied by the multiple bands to move the tooth with the aid of the guide slot.

An object of the present invention is to provide an orthodontic system that has a relatively good visual aesthetic quality and that may prevent prominence of the root.

According to the present invention, there is provided an orthodontic system as set forth in claim 1.

Other features and advantages of the present invention will become apparent in the following detailed description of the preferred embodiments with reference to the accompanying drawings, of which:
FIG. 1 is a schematic front view of conventional dental braces attached to teeth of a user;
FIG. 2 is a schematic front view of another conventional dental braces including a plurality of brackets that are coated with composite materials having a color similar to tooth color;
FIGS. 3A is a schematic cross-sectional view of a conventional dental appliance covering a tooth;
FIG. 3B is a schematic side view of the tooth being pushed and rotated by the conventional dental appliance;
FIG. 4 is a perspective view of a first preferred embodiment of an orthodontic system according to the present invention, illustrating a dental appliance of the orthodontic system and a dentition to be received therein;
FIG. 5 is a schematic cross-sectional view of the dental appliance formed with two protrusions for contacting and pushing a tooth of the dentition;
FIG. 6 is a schematic cross-sectional view of the dental appliance used to pitch the tooth of the dentition;
FIG.7A is a schematic top view of a modification of the dental appliance, illustrating another example of a tooth to be rotated by a torsion force provided by the protrusions;
FIG. 7B is a schematic top view of another modification of the dental appliance, illustrating one protrusion being formed on the dental appliance to provide a push force to a tooth;
FIG. 8 is a perspective view of a pliers for forming a protrusion on the dental appliance of the first preferred embodiment;
FIGS. 9 to 13 are fragmentary perspective views illustrating various configurations of the pliers, respectively;
FIG. 14 is a schematic front view of the dental appliance of the first preferred embodiment, illustrating protrusions having different profiles formed by the pliers shown in FIGS. 8 to 13;
FIG. 15 is a perspective view of a second preferred embodiment of the orthodontic system according to the present invention;
FIG. 16 is a perspective schematic view illustrating the dental appliance of the second preferred embodiment and a dentition to be received therein;
FIG. 17 is a perspective view of an attaching member of an auxiliary arrangement unit of the second preferred embodiment that is to be bonded to a tooth of the dentition;
FIG. 18 is a schematic perspective view of a third preferred embodiment of the orthodontic system according to the present invention;
FIG. 19 is a schematic perspective view of a fourth preferred embodiment of the orthodontic system according to the present invention; and
FIG. 20 is a flow chart illustrating a method of manufacturing the orthodontic system according to the present invention.

Before the present invention is described in greater detail, it should be noted that like reference numerals are used to indicate corresponding or analogous elements throughout the accompanying disclosure.

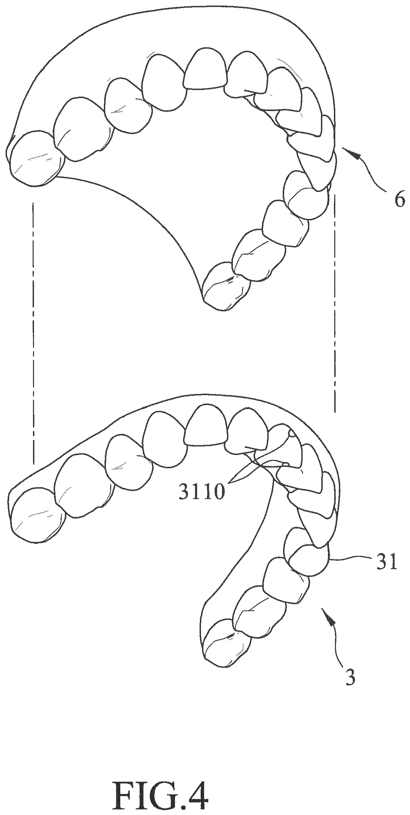

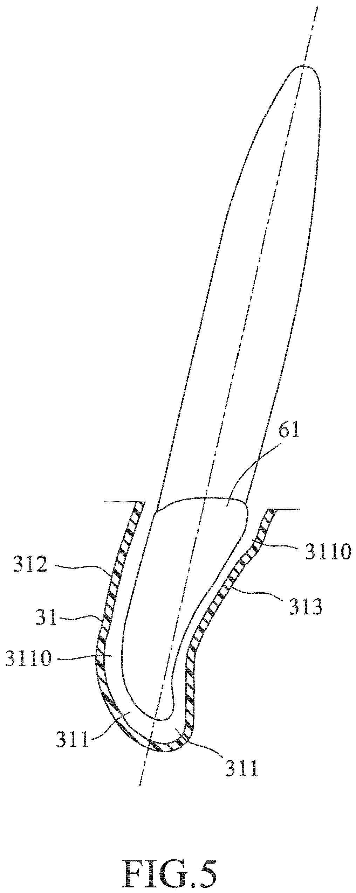

Referring to FIGS. 4 and 5, a first preferred embodiment of the orthodontic system according to the present invention is shown to include a dental appliance 3. The dental appliance 3 is made of a transparent material and includes a main body 31. The main body 31 includes a buccal side wall 312, and a lingual side wall 313 opposite to and cooperating with the buccal side wall 312 to define a receiving space 311 for receiving a tooth 61 of a dentition 6 of a user therein.

The buccal side wall 312 and the lingual side wall 313 define respective reserve rooms 3110 in spatial communication with the receiving space 311 for providing flexibility to the main body 31 so as to accommodate movement of the tooth 61 caused by correcting the tooth 61.

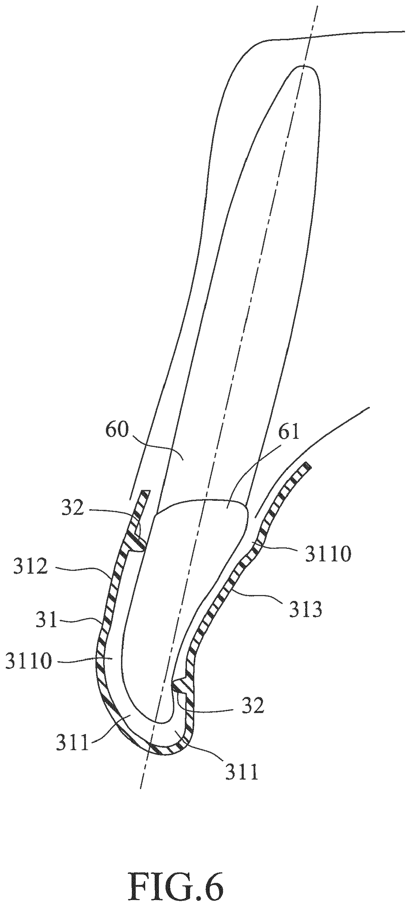

Referring to FIG. 6, in a case that the tooth 61 requires rearrangement by pitching or translating, two protrusions 32 are respectively formed on the buccal side wall 312 and the lingual side wall 313 to facilitate the tooth 61 to move toward a desired position by buccal crown torque. In this embodiment, the protrusions 32 are vertically spaced apart from each other, and protrude into the receiving space 311 for contacting and pushing the tooth 61 in opposite directions respectively away from the protrusions 32. One of the reserve rooms 3110 that is formed on the buccal side wall 312 corresponds to one of the protrusions 32 that is formed on the lingual side wall 313, and the other one of the reserve rooms 3110 that is formed on the lingual side wall 313 corresponds to the other one of the protrusions 32 that is formed on the buccal side wall 312.

One of the protrusions 32 provides a torque to the tooth 61, and the other one of the protrusions 32 provides an opposite torque to the tooth 61 for counteracting rotation of the tooth 61 so as to provide a translational force (indicated by the arrow in FIG. 6) to pitch or translate the tooth 61. By this way, the tooth 61 would not rotate relative to the alveolar bone (not shown) to thereby prevent inclination and prominence of the tooth 61 and a root 60 of the dentition 6.

In another case where the tooth 61 requires pitching or translating in an opposite direction, the protrusions 32 and the reserve rooms 3110 may be otherwise formed in the buccal side wall 312 and the lingual side wall 313, respectively.

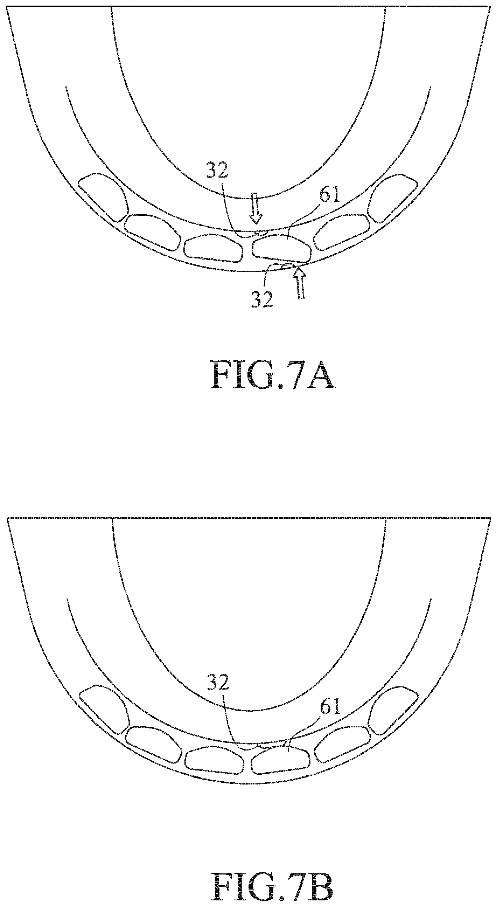

Referring to FIG. 7A, a modification of the protrusions 32 is shown. When the tooth 61 requires rearrangement by torsion force indicated by the arrows in FIG. 7A, the main body 31 of the dental appliance 3 is formed with two protrusions 32 horizontally spaced apart from each other to push the tooth 61 in desired directions. In particular, the protrusions 32 apply forces to the tooth 61 in opposite directions, respectively, so as to yaw the tooth 61. Note that the position of the reserve rooms 3110 are modified to correspond to the respective protrusions 32 accordingly. It should be further noted that, as shown in FIG. 7B, only one protrusion 32 may be formed on the lingual side wall 313 to provide a push force to the tooth 61 according to specific demand of the user.

Although the main body 31 receives the dentition 6 in an upper jaw portion of the user in this embodiment, it may be configured to receive a dentition in a lower jaw portion of the user in other embodiments. The dental appliance 3 further receives a portion of the gums, the palate, and bottom of the mouth therein to provide a relatively good structural strength and increase intensity of rearrangement for the dentition 6. Further, the dental appliance 3 may serve as a container receiving a medicament for particular medicine treatment, such as teeth bleach or periodontal disease for the teeth, while rearrangement of the dentition 6 is being progressed.

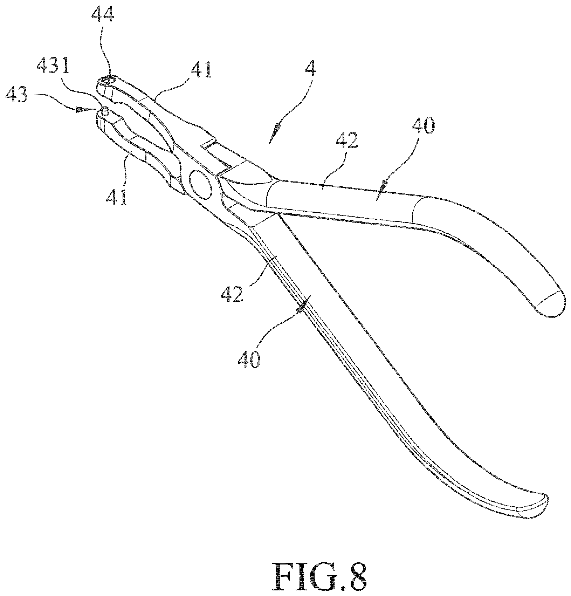

As shown in FIG. 8, the protrusions 32 may be formed by a pliers 4 that includes a pair of hinged arms 40. Each of the hinged arms 40 includes a handle portion 42 and a jaw portion 41 connected to the handle portion 42. The jaw portions 41 of the hinged arms 40 are formed with a male molding member 43 and a female molding member 44, respectively. The male molding member 43 is a projection extending from the jaw portion 41 of one of the hinged arms 40, and has a molding surface 431 for contacting the main body 31 of the dental appliance 3. The female molding member 44 is a through bore engageable and cooperating with the male molding member 43 to form the protrusions 32 on the main body 31 of the dental appliance 3.

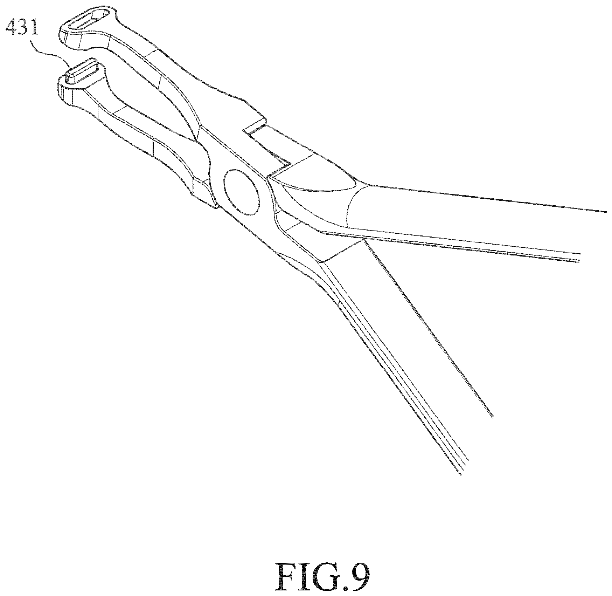

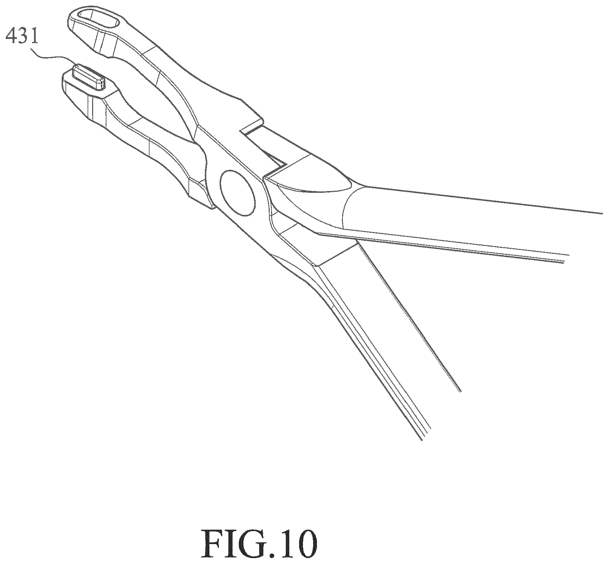

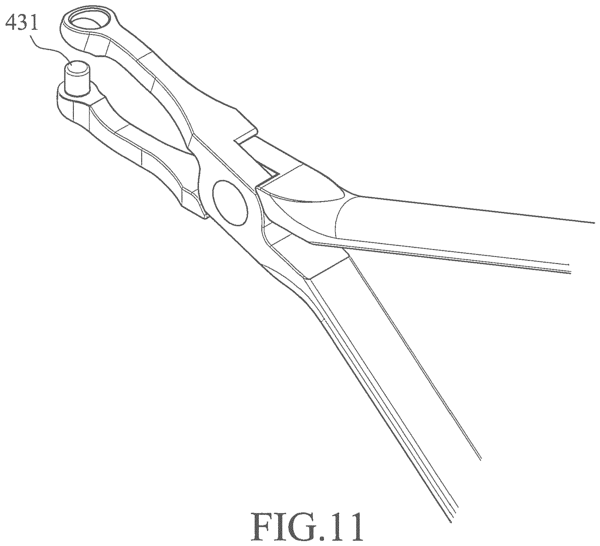

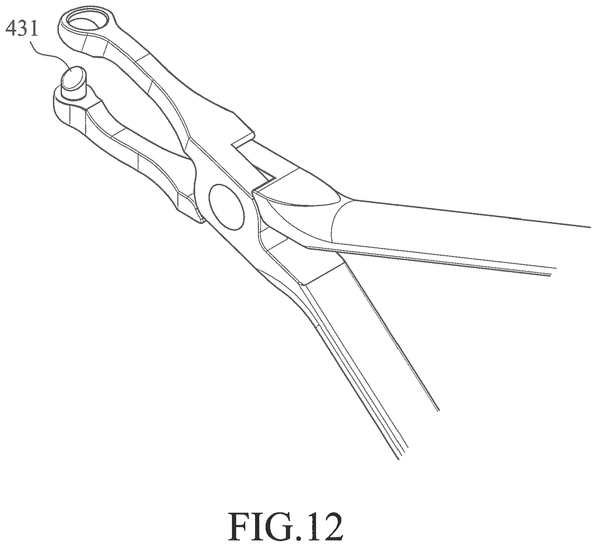

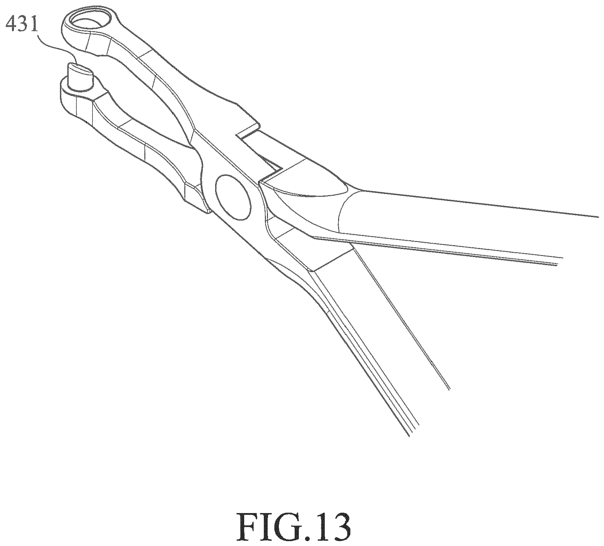

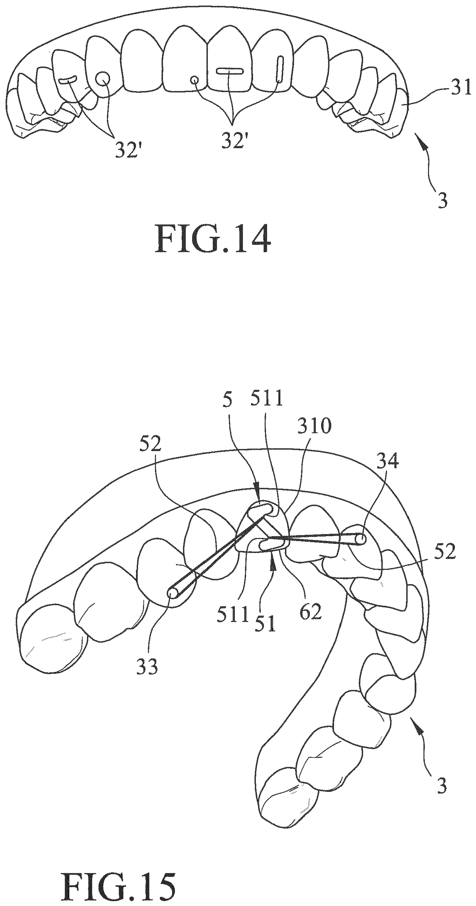

Further referring to FIGS. 9 to 13, the molding surface 431 of the male molding member 43 of the pliers 4 can be configured as a flat surface (FIG. 11), a curved surface (FIGS. 8, 9 and 10), or an inclined surface (FIGS. 12 and 13) for forming protrusions 32' (see FIG. 14) with different profiles on the main body 31 of the dental appliance 3. Specifically, the male molding member 43 shown in FIG. 9 is configured to form a horizontal strip as one of the protrusions 32 shown in FIG. 6 for translating or pitching the tooth 61. The male molding member 43 shown in FIG. 10 is configured to form a vertical strip as one of the protrusions 32 shown in FIG. 7A for yawing the tooth 61.

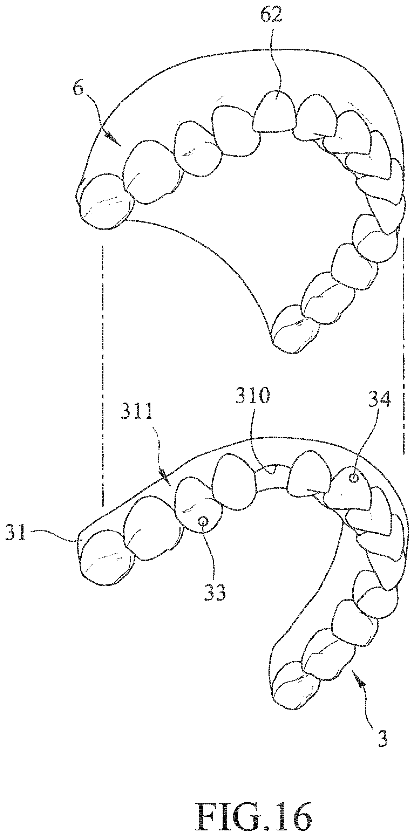

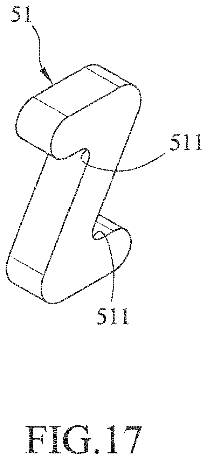

Referring to FIGS. 15 to 17, a second preferred embodiment of the orthodontic system of the present invention is shown. In this embodiment, when incisors of a user extremely project and it is desired to move the incisors by a relatively large translational force, the orthodontic system further includes an auxiliary arrangement unit 5. Since it may be ineffective to correct the extremely projected incisors directly using the dental appliance 3, the auxiliary arrangement unit 5 is used to rearrange and translate a tooth 62 (e.g., a canine) of the user backwardly before using the dental appliance 3 to rearrange the incisors. The main body 31 of the dental appliance 3 is formed with a through hole 310 for permitting extension of the tooth 62 of the dentition 6 of the user, and a main projection 33 and an auxiliary projection 34 flanking the through hole 310 and projecting away from the receiving space 311. Preferably, the main projection 33 and the auxiliary projection 34 are formed by the pliers 4 shown in FIGS. 12 and 13 with the inclined molding surface 431 that forms an inclined column.

The auxiliary arrangement unit 5 includes an attaching member 51 and two restraining members 52. The attaching member 51 is Z-shaped, has two bent portions 511, and is bonded to the tooth 62, which extends through the through hole 310 of the main body 31 of the dental appliance 3. Each of the restraining members 52 interconnects a respective one of the projections 33, 34 and a respective one of the bent portions 511 for providing a translational force to the tooth 62. In this embodiment, the restraining members 52 are elastic bands. Note that a distance between the attaching member 51 and the respective projections 33 may be modified to provide a desired torque.

It should be further noted that the number of the restraining members 52 and the projections 33 may vary according to specific need of the user. For example, when a pulling force rather than a translational force is required, the number of the restraining member 52 and projections 33 may both be one such that the restraining member 52 pulls the tooth 62 toward the projection 33. Further, when a plurality of teeth require rearrangement by translational force, the main body 31 of the dental appliance 3 may be formed with a plurality of through holes 310 that correspond in number to the teeth to be rearranged and that permit the respective teeth to extend therethrough. The number of the attaching members 51 may also be altered depending on the number of teeth to be rearranged by torsion force.

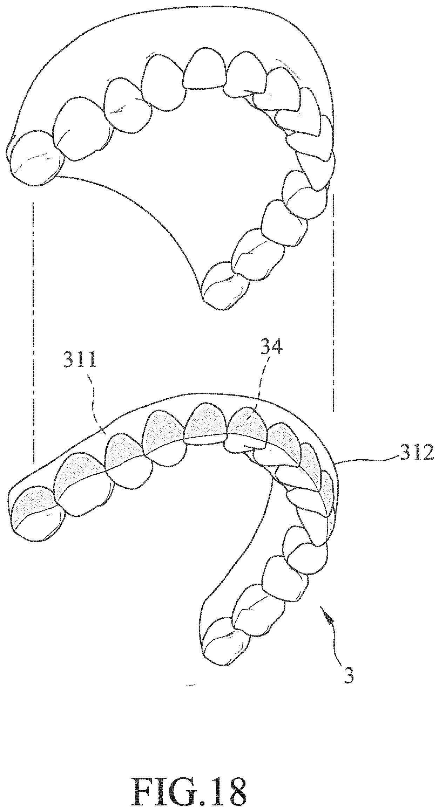

Referring to FIG. 18, a third preferred embodiment of the orthodontic system of the present invention is shown. The dental appliance 3 in this embodiment includes a colored layer 34 attached to the buccal side wall 312 and having a tooth color. When it is desired to conceal the user' s teeth color, the colored layer 34 is provided for improving visual appearance of the user's teeth.

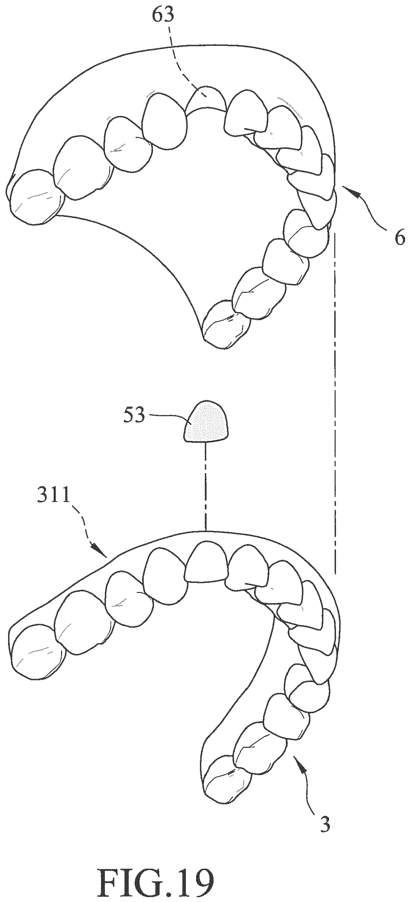

Referring to FIG. 19, a fourth preferred embodiment of the orthodontic system of the present invention is shown. The difference between this embodiment and the first embodiment resides in that the orthodontic system further includes a denture 53 mounted in the receiving space 311 of the dental appliance 3. When the user lacks a tooth and a cavity 63 is formed in the dentition 6, the denture 53 is provided to prevent undesired teeth movement toward the cavity 63 since a dental implant will be processed after orthodontic treatment.

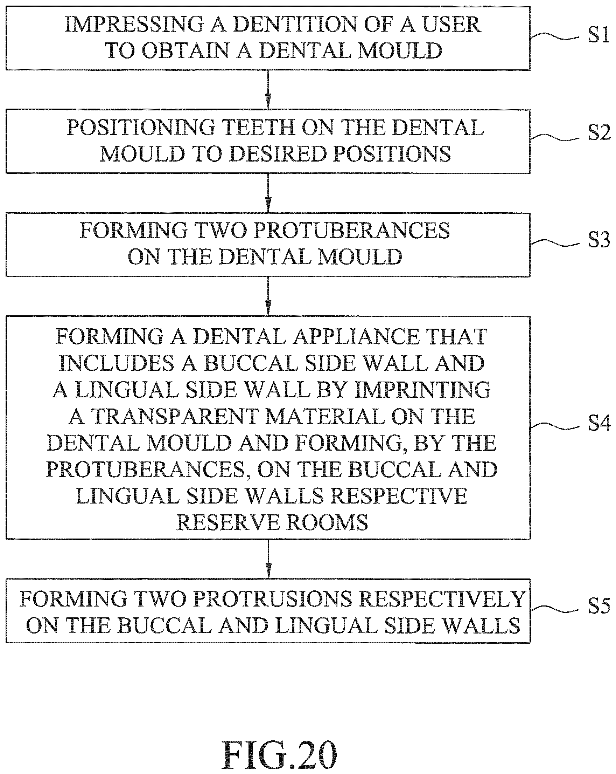

Referring to FIG. 20, a method for manufacturing an orthodontic system includes the following steps. In step S1, a dental mould is obtained by impressing the dentition 6 of a user. In step S2, teeth on the dental mould are positioned to a desired position. In step S3, two protuberances are formed on the dental mould. In step S4, a dental appliance 3 is formed by imprinting a transparent material on the dental mould. The dental appliance 3 includes a main body 31 that is configured to include a buccal side wall 312 and a lingual side wall 313 opposite to and cooperating with the buccal side wall 312 to define a receiving space 311 for receiving the tooth 61 of the dentition 6 of a user therein. The buccal side wall 312 and the lingual side wall 313 are formed with two reserve rooms 3110, which are in spatial communication with the receiving space 311 and are caused by the protuberances, for providing flexibility to the main body 31 so as to accommodate movement of the tooth 61 caused by correcting the tooth 61.

After movement of the tooth 61 toward a predetermined intermediate position, in step S5, two protrusions 32 are formed respectively on the buccal side wall 312 and the lingual side wall 313. The protrusions 32 are formed to protrude into the receiving space 311 to contact and push the tooth 61 in opposite directions respectively away from the protrusions 32 so as to facilitate rearrangement of the tooth 61. One of the reserve rooms 3110 that is formed on the buccal side wall 312 corresponds to one of the protrusions 32 that is formed on the lingual side wall 313, and the other one of the reserve rooms 3110 that is formed on the lingual side wall 313 corresponds to the other one of the protrusions 32 that is formed on the buccal side wall 312.

To sum up, the dental appliance 3 made of a transparent material provides a relatively good visual aesthetic quality of the orthodontic system as compared to the conventional dental braces 1, 2 illustrated in FIGS. 1 and 2. Further, by virtue of the reserved rooms 3110 that provide flexibility to the main body 31 and the protrusions 32 having various configuration and providing torques to the tooth 61, the tooth 61 can be corrected properly without causing prominence of the root 60.

## Claims

1. An orthodontic system comprising:
a dental appliance (3) made of a transparent material and including a main body (31) that includes a buccal side wall (312) and a lingual side wall (313) opposite to and cooperating with said buccal side wall (312) to define a receiving space (311) for receiving at least a portion of a dentition (6) of a user therein;
wherein said main body (31) is formed with a main projection (33) projecting outwardly away from said receiving space (311);
said orthodontic system further comprising an auxiliary arrangement unit (5) including an attaching member (51) that is adapted to be bonded to a tooth (62) of the dentition (6) of the user, and at least one restraining member (52) that interconnects said main projection (33) and said attaching member (51) for moving the tooth (62) in a direction toward said main projection (33);
said main body (31) of said dental appliance (3) being formed with a through hole (310);
said orthodontic system being **characterized in that** said through hole (310) is adapted for permitting the tooth (62), to which said attaching member (51) is bonded, to extend therethrough;
said dental appliance (3) is formed with an auxiliary projection (34) opposite to said main projection (33) with respect to said through hole (310), and said auxiliary arrangement unit (5) includes two of said restraining members (52), each of which interconnects a corresponding one of said main and auxiliary projections (33, 34) and said attaching member (51) for translating the tooth (62) toward said main projection (33); and
said attaching member (51) is Z-shaped and has two bent portions (511) for connection with said restraining members (52), respectively.

2. The orthodontic system as claimed in claim 1, **characterized in that** at least one of said buccal side wall (312) and said lingual side wall (313) define a reserve room (3110) in spatial communication with said receiving space (311) for providing flexibility to said main body (31) so as to accommodate movement of a tooth (61) of the dentition (6) of the user caused by correcting the tooth (61).

3. The orthodontic system as claimed in claim 2, **characterized in that** two of said reserve rooms (3110) are respectively formed on said buccal side wall (312) and said lingual side wall (313), and two protrusions (32) are respectively formed on said buccal side wall (312) and said lingual side wall (313), and protrude into said receiving space (311) for contacting and pushing the tooth (61) in opposite directions respectively away from said protrusions (32).

4. The orthodontic system as claimed in claim 3,**characterized in that** said protrusions (32) are vertically spaced apart from each other (are vertically staggered), one of said reserve rooms (3110) that is formed on said buccal side wall (312) corresponds to one of said protrusions (32) that is formed on said lingual side wall (313), and the other one of said reserve rooms (3110) that is formed on said lingual side wall (313) corresponds to the other one of said protrusions (32) that is formed on said buccal side wall (312).

5. The orthodontic system as claimed in claim 4, **characterized in that** one of said protrusions (32) is configured to provide a torque to the tooth (61), and the other one of said protrusions (32) is configured to provide an opposite torque to the tooth (61) for counteracting rotation of the tooth (61) so as to translate the tooth (61).

6. The orthodontic system as claimed in claim 4, **characterized in that** one of said protrusions (32) is configured to provide a torque to the tooth (61), and the other one of said protrusions (32) is configured to provide an opposite torque to the tooth (61) for moving and rotating the tooth (61) without causing prominence of a root (60) and the tooth (61).

7. The orthodontic system as claimed in claim 3,**characterized in that** said protrusions (32) are horizontally spaced apart from each other and are configured to yaw the tooth (61), one of said reserve rooms (3110) that is formed on said buccal side wall (312) corresponds to one of said protrusions (32) that is formed on said lingual side wall (313), and the other one of said reserve rooms (3110) that is formed on said lingual side wall (313) corresponds to the other one of said protrusions (32) that is formed on said buccal side wall (312).

8. The orthodontic system as claimed in any one of claims 1 to7, further **characterized by** a pliers (4) including a pair of hinged arms (40), each of which includes a handle portion (42) and a jaw portion (41) connected to said handle portion (42), said jaw portion (41) of one of said hinged arms (40) being formed with a male molding member (43), said jaw portion (41) of the other one of said hinged arms (40) being formed with a female molding member (44) that matches with said male molding member (43) and that is configured to cooperate with said male molding member (43) to form said protrusions (32) and projections (33, 34) on said main body (31);
said male molding member (43) having a molding surface (431) for contacting said main body (31) of said dental appliance (3) to form said protrusions (32), said molding surface (431) being in one of a flat surface, a curved surface, and an inclined surface.

9. The orthodontic system as claimed in claim 8, further **characterized in that** said molding member (43) is configured to form one of a vertical strip as one of said protrusions (32) for rotating the tooth (61), a horizontal strip as one of said protrusions (32) for translating the tooth (61), and an inclined column as one of said projections (33, 34).

## Patentansprüche

1. Orthodontisches System, das Folgendes umfasst:
eine dentale Vorrichtung (3), die aus einem transparenten Material hergestellt ist und einen Hauptkörper (31) beinhaltet, der eine bukkale Seitenwand (312) und eine linguale Seitenwand (313), die entgegengesetzt zu der bukkalen Seitenwand (312) ist und mit dieser zusammenwirkt, beinhaltet, um einen Aufnahmeraum (311) zum Aufnehmen mindestens eines Teils einer Zahnreihe (6) eines Benutzers darin zu definieren;
wobei der Hauptkörper (31) mit einem Hauptüberstand (33) ausgebildet ist, der nach außen von dem Aufnahmeraum (311) weg übersteht;
wobei das orthodontische System weiterhin eine Hilfsanordnungseinheit (5) umfasst, die ein Anbringungselement (51), das dazu geeignet ist, an einen Zahn (62) der Zahnreihe (6) des Benutzers gebondet zu werden, und mindestens ein Rückhalteelement (52) beinhaltet, das den Hauptüberstand (33) und das Anbringungselement (51) zum Bewegen des Zahns (62) in einer Richtung zu dem Hauptüberstand (33) hin miteinander verbindet;
wobei der Hauptkörper (31) der dentalen Vorrichtung (3) mit einer Durchgangsbohrung (310) ausgebildet ist;
wobei das orthodontische System **dadurch gekennzeichnet ist, dass** die Durchgangsbohrung (310) dazu geeignet ist, dem Zahn (62), an den das Anbringungselement (51) gebondet ist, zu ermöglich, sich dorthin durch zu erstrecken;
die dentale Vorrichtung (3) mit einem Hilfsüberstand (34) ausgebildet ist, der in Bezug auf die Durchgangsbohrung (310) entgegengesetzt zu dem Hauptüberstand (33) ist, und die Hilfsanordnungseinheit (5) zwei der Rückhalteelemente (52) beinhaltet, von denen jedes einen entsprechenden des Haupt- und des Hilfsüberstands (33, 34) und das Anbringungselement (51) zum Translatieren des Zahns (62) zu dem Hauptüberstand (33) hin miteinander verbindet; und
das Anbringungselement (51) Z-förmig ist und zwei gebogene Teile (511) zur jeweiligen Verbindung mit den Rückhalteelementen (52) aufweist.

2. Orthodontisches System nach Anspruch 1, **dadurch gekennzeichnet, dass** mindestens eine der bukkalen Seitenwand (312) und der lingualen Seitenwand (313) einen Reserveraum (3110) in räumlicher Kommunikation mit dem Aufnahmeraum (311) zum Versehen des Hauptkörpers (31) mit Flexibilität definiert, um einer Bewegung eines Zahns (61) der Zahnreihe (6) des Benutzers, die durch ein Korrigieren des Zahns (61) verursacht wird, Rechnung zu tragen.

3. Orthodontisches System nach Anspruch 2, **dadurch gekennzeichnet, dass** zwei der Reserveräume (3110) jeweils an der bukkalen Seitenwand (312) und der lingualen Seitenwand (313) ausgebildet sind und zwei Vorsprünge (32) jeweils auf der bukkalen Seitenwand (312) und der lingualen Seitenwand (313) ausgebildet sind und in den Aufnahmeraum (311) zum Berühren und Drücken das Zahns (61) in entgegengesetzte Richtungen, jeweils von den Vorsprüngen (32) weg, vorspringen.

4. Orthodontisches System nach Anspruch 3, **dadurch gekennzeichnet, dass** die Vorsprünge (32) vertikal voneinander beabstandet sind (vertikal gestaffelt sind), einer der Reserveräume (3110), der an der bukkalen Seitenwand (312) ausgebildet ist, einem der Vorsprünge (32), der auf der lingualen Seitenwand (313) ausgebildet ist, entspricht, und der andere der Reserveräume (3110), der an der lingualen Seitenwand (313) ausgebildet ist, dem anderen der Vorsprünge (32), der auf der bukkalen Seitenwand (312) ausgebildet ist, entspricht.

5. Orthodontisches System nach Anspruch 4, **dadurch gekennzeichnet, dass** einer der Vorsprünge (32) dazu konfiguriert ist, dem Zahn (61) ein Drehmoment zu verleihen, und der andere der Vorsprünge (32) dazu konfiguriert ist, dem Zahn (61) ein entgegengesetztes Drehmoment zum Entgegenwirken einer Drehung des Zahns (61) zu verleihen, um den Zahn (61) zu translatieren.

6. Orthodontisches System nach Anspruch 4, **dadurch gekennzeichnet, dass** einer der Vorsprünge (32) dazu konfiguriert ist, dem Zahn (61) ein Drehmoment zu verleihen, und der andere der Vorsprünge (32) dazu konfiguriert ist, dem Zahn (61) ein entgegengesetztes Drehmoment zum Bewegen und Drehen des Zahns (61) zu verleihen, ohne ein Hervortreten einer Wurzel (60) und des Zahns (61) zu verursachen.

7. Orthodontisches System nach Anspruch 3, **dadurch gekennzeichnet, dass** die Vorsprünge (32) horizontal voneinander beabstandet sind und dazu konfiguriert sind, den Zahn (61) zu gieren, einer der Reserveräume (3110), der an der bukkalen Seitenwand (312) ausgebildet ist, einem der Vorsprünge (32), der auf der lingualen Seitenwand (313) ausgebildet ist, entspricht, und der andere der Reserveräume (3110), der an der lingualen Seitenwand (313) ausgebildet ist, dem anderen der Vorsprünge (32), der auf der bukkalen Seitenwand (312) ausgebildet ist, entspricht.

8. Orthodontisches System nach einem der Ansprüche 1 bis 7, das weiterhin durch eine Zange (4) gekennzeichnet ist, die ein Paar von klappbaren Armen (40) beinhaltet, von denen jeder einen Griffteil (42) und einen Backenteil (41), der mit dem Griffteil (42) verbunden ist, beinhaltet, wobei der Backenteil (41) eines der klappbaren Arme (40) mit einem männlichen Formungselement (43) ausgebildet ist, wobei jeder Backenteil (41) des anderen der klappbaren Arme (40) mit einem weiblichen Formungselement (44) ausgebildet ist, das mit dem männlichen Formungselement (43) zusammenpasst und das dazu konfiguriert ist, mit dem männlichen Formungselement (43) zusammenzuwirken, um die Vorsprünge (32) und die Überstände (33, 34) auf dem Hauptkörper (31) zu bilden; wobei das männliche Formungselement (43) eine Formungsfläche (431) zum Berühren des Hauptkörpers (31) der dentalen Vorrichtung (3) aufweist, um die Vorsprünge (32) zu bilden, wobei die Formungsfläche (431) in einer von einer flachen Fläche, einer gewölbten Fläche und einer geneigten Fläche ist.

9. Orthodontisches System nach Anspruch 8, weiterhin **dadurch gekennzeichnet, dass** das Formungselement (43) dazu konfiguriert ist, einen von einem vertikalen Streifen als einen der Vorsprünge (32) zum Drehen des Zahns (61), einem horizontalen Streifen als einen der Vorsprünge (32) zum Translatieren des Zahns (61) und einer geneigten Säule als einen der Vorsprünge (33, 34) zu bilden.

## Revendications

1. Système orthodontique comportant :
un appareil dentaire (3) réalisé à partir d'un matériau transparent et comprenant un corps principal (31) qui comprend une paroi côté buccal (312) et une paroi côté lingual (313) se trouvant à l'opposé de ladite paroi côté buccal (312) et coopérant avec celle-ci pour définir un espace de réception (311) servant à recevoir au moins une partie d'une dentition (6) d'un utilisateur dans celui-ci ;
dans lequel ledit corps principal (31) est formé avec une protubérance principale (33) faisant saillie vers l'extérieur à l'opposé dudit espace de réception (311) ;
ledit système orthodontique comportant par ailleurs une unité d'agencement auxiliaire (5) comprenant un élément de fixation (51) qui est adapté pour être lié à une dent (62) de la dentition (6) de l'utilisateur, et au moins un élément de retenue (52) qui relie ladite protubérance principale (33) et ledit élément de fixation (51) à des fins de déplacement de la dent (62) dans une direction allant vers ladite protubérance principale (33) ;
ledit corps principal (31) dudit appareil dentaire (3) étant formé avec un trou traversant (310) ;
ledit système orthodontique étant **caractérisé en ce que** ledit trou traversant (310) est adapté pour permettre à la dent (62), au niveau de laquelle ledit élément de fixation (51) est lié, de s'étendre au travers de celui-ci ;
ledit appareil dentaire (3) est formé avec une protubérance auxiliaire (34) se trouvant à l'opposé de ladite protubérance principale (33) par rapport audit trou traversant (310), et ladite unité d'agencement auxiliaire (5) comprend deux desdits éléments de retenue (52), dont chacun relie une protubérance correspondante parmi lesdites protubérances principale et auxiliaire (33, 34) et ledit élément de fixation (51) à des fins de translation de la dent (62) vers ladite protubérance principale (33) ; et
ledit élément de fixation (51) est en forme de Z et a deux parties pliées (511) à des fins de connexion avec lesdits éléments de retenue (52), respectivement.

2. Système orthodontique selon la revendication 1, **caractérisé en ce qu'**au moins l'une parmi ladite paroi côté buccal (312) et ladite paroi côté lingual (313) définit une zone de réserve (3110) en communication spatiale ave ledit espace de réception (311) à des fins de mise en oeuvre de flexibilité au niveau dudit corps principal (31) de manière à permettre le mouvement d'une dent (61) de la dentition (6) de l'utilisateur que cause la correction de la dent (61).

3. Système orthodontique selon la revendication 2, **caractérisé en ce que** deux desdites zones de réserve (3110) sont formées respectivement sur ladite paroi côté buccal (312) et ladite paroi côté lingual (313), et deux parties saillantes (32) sont formées respectivement sur ladite paroi côté buccal (312) et ladite paroi côté lingual (313), et font saillie dans ledit espace de réception (311) pour entrer en contact avec la dent (61) et pousser sur celle-ci dans des directions opposées respectivement à l'opposé desdites parties saillantes (32).

4. Système orthodontique selon la revendication 3, **caractérisé en ce que** lesdites parties saillantes (32) sont espacées à la verticale l'une par rapport à l'autre (elles sont décalées à la verticale), l'une desdites zones de réserve (3110) qui est formée sur ladite paroi côté buccal (312) correspond à l'une desdites parties saillantes (32) qui est formée sur ladite paroi côté lingual (313), et l'autre desdites zones de réserve (3110) qui est formée sur ladite paroi côté lingual (313) correspond à l'autre desdites parties saillantes (32) qui est formée sur ladite paroi côté buccal (312).

5. Système orthodontique selon la revendication 4, **caractérisé en ce que** l'une desdites parties saillantes (32) est configurée pour exercer un couple sur la dent (61), et l'autre desdites parties saillantes (32) est configurée pour exercer un couple opposé sur la dent (61) pour compenser la rotation de la dent (61) à des fins de translation de la dent (61).

6. Système orthodontique selon la revendication 4, **caractérisé en ce que** l'une desdites parties saillantes (32) est configurée pour exercer un couple sur la dent (61), et l'autre desdites parties saillantes (32) est configurée pour exercer un couple opposé sur la dent (61) à des fins de déplacement et de rotation de la dent (61) sans entraîner une proéminence d'une racine (60) et de la dent (61).

7. Système orthodontique selon la revendication 3, **caractérisé en ce que** lesdites parties saillantes (32) sont espacées à l'horizontale l'une par rapport à l'autre et sont configurées pour exercer un mouvement de lacet sur la dent (61), l'une desdites zones de réserve (3110) qui est formée sur ladite paroi côté buccal (312) correspond à l'une desdites parties saillantes (32) qui est formée sur ladite paroi côté lingual (313), et l'autre desdites zones de réserve (3110) qui est formée sur ladite paroi côté lingual (313) correspond à l'autre desdites parties saillantes (32) qui est formée sur ladite paroi côté buccal (312).

8. Système orthodontique selon l'une quelconque des revendications 1 à 7, **caractérisé par** ailleurs par une pince (4) comprenant une paire de bras articulés (40), dont chacun comprend une partie formant manche (42) et une partie formant mâchoire (41) connectée à ladite partie formant manche (42), ladite partie formant mâchoire (41) de l'un desdits bras articulés (40) étant formée avec un élément de moulage mâle (43), ladite partie formant mâchoire (41) de l'autre desdits bras articulés (40) étant formée avec un élément de moulage femelle (44) qui correspond audit élément de moulage mâle (43) et qui est configuré pour coopérer avec ledit élément de moulage mâle (43) pour former lesdites parties saillantes (32) et lesdites protubérances (33, 34) sur ledit corps principal (31) ;
ledit élément de moulage mâle (43) ayant une surface de moulage (431) servant à des fins de contact avec ledit corps principal (31) dudit appareil dentaire (3) pour former lesdites parties saillantes (32), ladite surface de moulage (431) étant sous la forme de l'une parmi une surface plate, une surface courbe, et une surface inclinée.

9. Système orthodontique selon la revendication 8, **caractérisé par** ailleurs en ce que ledit élément de moulage (43) est configuré pour former l'une parmi une bande verticale comme étant l'une desdites parties saillantes (32) à des fins de rotation de la dent (61), une bande horizontale comme étant l'une desdites parties saillantes (32) à des fins de translation de la dent (61), et une colonne inclinée comme étant l'une desdites protubérances (33, 34).
